# EUROPÄISCHE PATENTSCHRIFT

(11) **EP 1 382 810 B1**
(45) Veröffentlichungstag und Bekanntmachung des Hinweises auf die Patenterteilung: **21.12.2005**
(21) Anmeldenummer: 03101819.5
(22) Anmeldetag: 20.06.2003
(51) Int. Cl.: F01M 13/04, B01D 53/00

(54) **Ölabscheider für Kurbelgehäuseentlüftung**
Oil separator for a crankcase ventilation system
Separateur d'huile pour un système de aeration d'un moteur à combustion interne

(30) Priorität: 16.07.2002 DE 10232046
(43) Veröffentlichungstag der Anmeldung: 21.01.2004
(73) Patentinhaber: MANN+HUMMEL GmbH, 71638 Ludwigsburg (DE)
(72) Erfinder: Dworatzek, Klemens, 68535, Edingen (DE); Münkel, Karlheinz, 75038, Oberderdingen-Flehingen (DE); Hartmann, Marion, 68766, Hockenheim (DE)

(56) Entgegenhaltungen:
- WO-A-01/90540
- DE-A- 19 647 256
- US-A- 5 429 101
- US-A- 5 450 835

## Beschreibung

Die Erfindung bezieht sich auf eine Filtereinrichtung nach dem Oberbegriff des Anspruches 1.

Filtereinrichtungen zur Kurbelgehäuseentlüftung, die auch als Ölabscheider bezeichnet werden, werden zur Filterung und Reinigung der ölhaltigen Luft im Kurbelgehäuse eingesetzt, wobei das abgeschiedene Öl in den Ölkreislauf zurückgeführt und die gereinigte Luft in der Regel in den Ansaugtrakt der Brennkraftmaschine eingeleitet wird. Die Filtereinrichtung umfasst ein Filterelement in einem Filtergehäuse, dem über eine Einströmöffnung die ölhaltige Luft zugeführt wird, wobei die gereinigte Luft über eine Abströmöffnung im Filtergehäuse abgeführt wird. Aus Sicherheitsgründen ist in den Gehäusedeckel ein Überdruckventil integriert, welches mit dem Druck der Anström- bzw. Rohseite des Filterelementes beaufschlagt wird und das bei Überschreiten eines Grenz-Überdruckes zur Druckentlastung im Filtergehäuse in eine Öffnungsposition überführt wird.

Derartige Filtereinrichtungen weisen üblicherweise Zylinderform auf, das Überdruckventil befindet sich meist in einem Gehäusedeckel, der auf eine axiale Stirnseite des Filtergehäuses aufgesetzt wird. Das Überdruckventil ist in dem Gehäusedeckel gehalten und wird über eine Ventilfeder in seine Schließposition beaufschlagt. Sobald der Überdruck im Filtergehäuse einen Wert überschreitet, bei dem das Überdruckventil gegen die Kraft der Ventilfeder geöffnet wird, strömt die ölhaltige Luft über das Ventil aus dem Filtergehäuse ab.

Der Gehäusedeckel ist in eine stirnseitige axiale Gehäuseöffnung des Filtergehäuses eingesetzt und mittels eines umlaufennung des Filtergehäuses eingesetzt und mittels eines umlaufenden Dichtringes zwischen der Innenseite der Wandung der Gehäuseöffnung und der Außenseite des Gehäusedeckels abgedichtet. Der Gehäusedeckel wird in der Regel in die Gehäuseöffnung eingeschraubt, wofür ein Gewinde zwischen Wandung der Gehäuseöffnung und Gehäusedeckel vorgesehen ist.

Soll beispielsweise für Wartungszwecke der Gehäusedeckel abgenommen werden, so besteht die Gefahr, dass die Drehbewegung zum Öffnen des Gehäusedeckels zu Beschädigungen des Dichtringes führt, welcher insbesondere nach längerer Verweilzeit zwischen Wandung der Gehäuseöffnung und Gehäusedeckel fest zwischen beiden Bauteilen verklebt sein kann, so dass eine Relativdrehbewegung zwischen Filtergehäuse und Gehäusedeckel zu hohen, in Umfangsrichtung auf den Dichtring wirkenden Kräften führen kann, welche den Dichtring beschädigen können. Ebenso bewirkt die Verklebung des Dichtringes einen stark erhöhten Kraftaufwand beim Öffnen des Gehäusedeckels.

Die US 5,450,835 zeigt eine Filtereinrichtung zur Kurbelgehäuseentlüftung, welches von einem Gehäusedeckel mit einem Dichtring zu verschließen ist. Der gehäusedeckel ist hierbei mehrteilig ausgelegt und weist mehrere Dichtmittel auf. Auch die WO 01/90540 A2 zeigt eine ähnliche Lösung im Stand der Technik.

Der Erfindung liegt das Problem zugrunde, eine Filtereinrichtung mit einem Filtergehäuse und einem abnehmbaren Gehäusedeckel auf einfache Weise so auszubilden, dass in Schließposition des Gehäusedeckels der Gehäuseinnenraum druckdicht verschlossen ist und beim Öffnen und Schließen des Gehäusedeckels die auf den Dichtring wirkenden Kräfte minimiert werden.

Dieses Problem wird erfindungsgemäß mit den Merkmalen des Anspruches 1 gelöst. Die Unteransprüche geben zweckmäßige Weiterbildungen an.

Erfindungsgemäß ist vorgesehen, dass der Gehäusedeckel zweigeteilt ist und einen Innendeckel und einen Außendeckel aufweist. Dies eröffnet die Möglichkeit einer Funktionsaufteilung zwidicht abgedichtet wird und der Außendeckel eine Schließ- und Haltefunktion übernimmt, wofür eine Verschlusseinrichtung zwischen Außendeckel und der Wandung der Gehäuseöffnung vorgesehen ist. Dem Innendeckel kommt somit eine Abdichtungsfunktion, dem Außendeckel eine Halte- und in Längsrichtung kraftübertragende Funktion zu. Auf diese Weise kann zum Aufsetzen des Gehäusedeckels zunächst der Innendeckel einschließlich Dichtring in die Gehäuseöffnung eingesetzt werden, wobei verschiedene Bewegungsmöglichkeiten mit axialer, rotatorischer oder axialrotatorischer Bewegungskomponente in Betracht kommen. Nach dem Einsetzen des Innendeckels kann der Außendeckel aufgesetzt werden und die Verschlusseinrichtung geschlossen werden, über die der Außendeckel in einer axial kraftübertragenden Weise mit der Wandung der Gehäuseöffnung zu verbinden ist. Die Schließbewegung des Außendeckels kann sich aufgrund der separaten Ausführung von der Schließ- bzw. Einsetzbewegung des Innendeckels unterscheiden. So ist insbesondere eine Drehbewegung zum Schließen bzw. Öffnen des Außendeckels möglich, wobei in diesem Fall die Verschlusseinrichtung als Verschlussgewinde ausgeführt ist, welches zweckmäßig auf der Außenseite der Gehäusewandung und der Innenseite des Außendeckels ausgebildet ist. Das Verschlussgewinde kann hierbei Abschnitte unterschiedlicher Gewindesteigung aufweisen, wobei insbesondere der Abschnitt benachbart zur Verschlussposition eine geringere Steigung aufweist als der Abschnitt, welcher zu Beginn der Aufsetz- und Schließbewegung des Außendeckels im Verschlussgewinde durchlaufen wird. Diese Ausführung besitzt den Vorteil, dass beim Schließen des Außendeckels zunächst ein relativ großer axialer Stellweg aufgrund der größeren Gewindesteigung zurückgelegt wird, bei Annäherung an die Schließposition jedoch aufgrund der geringeren Gewindesteigung ein kleinerer axialer Stellweg zurückgelegt wird, welcher eine leichtere Kräftedosierung bzw. einen besseren Kräfteeinsatz ermöglicht.

Das Zulassen einer rotatorischen Relativbewegung zwischen Außendeckel und Innendeckel bewirkt eine translatorische Bewegung des Innendeckels bei haftender Dichtung beim Lösen des Deckels. Daraus resultiert ein weitaus geringerer Kräfteeinsatz beim Lösen des Deckels und ebenso ein zerstörungsfreies Lösen des Dichtringes vom Inneren der Gehäusewandung.

In einer zweckmäßigen Weiterbildung ist der Innendeckel über eine Rasteinrichtung am Filtergehäuse gehalten. Diese Rasteinrichtung befindet sich vorteilhaft zwischen dem Innendeckel und dem Außendeckel, so dass der Innendeckel nicht unmittelbar mit der Wandung des Filtergehäuses verbunden ist, sondern die Raststellung erst mit dem Aufsetzen des Außendeckels erreicht wird und eine axiale Klemmkraft über den Außendeckel eingestellt wird, so dass axiale, auf den Innendeckel wirkende Kräfte zunächst auf den Außendeckel geleitet und über diesen in die Wandung der Gehäuseöffnung und weiter in das Filtergehäuse eingeleitet werden.

Das Überdruckventil ist vorteilhaft in den Innendeckel integriert, wobei zwischen Innendeckel und Außendeckel ein Abströmweg gebildet sein kann, über den das Medium im Falle eines Öffnens des Überdruckventiles aus dem Inneren des Filtergehäuses abströmen kann. Der Abströmweg zwischen Innendeckel und Außendeckel bewirkt eine Reduzierung des Druckimpulses des abzuleitenden Mediums. Der Abströmweg kann insbesondere als etwa tellerförmiger Abströmraum ausgebildet sein, welcher sich im Wesentlichen über die axiale Fläche von Innendeckel bzw. Außendeckel erstreckt. Eine Ableitung in die Umgebung kann über axiale Strömungswege erfolgen, die in einem überlappenden, umlaufenden Abschnitt zwischen Außendeckel und Innendeckel gebildet sind. Der Außendeckel übergreift das Überdruckventil und schützt in dieser Konfiguration das Überdruckventil vor Verschmutzungen und mechanischen Beschädigungen.

Weitere Vorteile und zweckmäßige Ausführungen sind den weiteren Ansprüchen, der Figurengeschreibung und den Zeichnungen zu entnehmen. Es zeigen:
- Fig. 1: eine perspektivische Ansicht einer Filtereinrichtung, in deren Gehäusedeckel ein Überdruckventil angeordnet ist,
- Fig. 2: die Filtereinrichtung in einem Längsschnitt,
- Fig. 3: ein zweiteilig ausgeführter Gehäusedeckel für die Filtereinrichtung, dargestellt in einer schematischen Ansicht,
- Fig. 4: ebenfalls ein zweiteiliger Gehäusedeckel für die Filtereinrichtung, jedoch in einer konstruktiven Darstellung,
- Fig. 5: eine schematische Darstellung eines Überdruckventiles, dessen Ventilkörper in Schließposition des Ventiles von einer Klemmeinrichtung mit einer quer zur Verschieberichtung des Ventilkörpers wirkenden Klemmkraft beaufschlagt wird
- Fig. 6: ein Überdruckventil in einer modifizierten Ausführung mit zwei separat ausgeführten Klemmeinrichtungen, über die der Ventilkörper des Überdruckventiles sowohl in seiner Schließposition als auch in seiner Öffnungsposition mit einer Klemmkraft beaufschlagt wird.

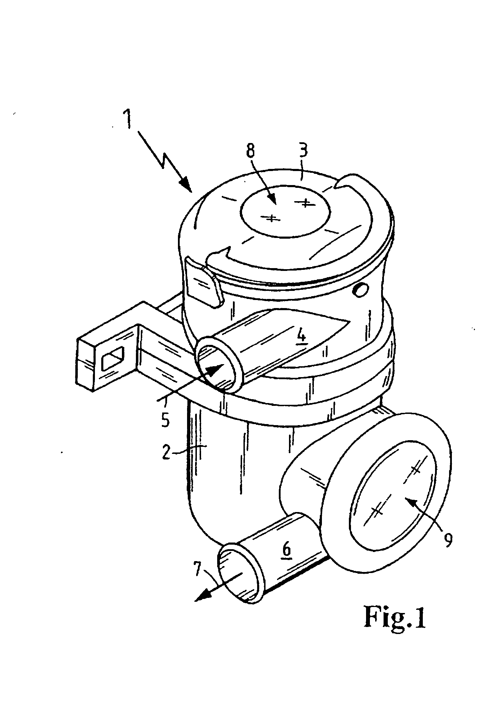

Die in Fig. 1 dargestellte Filtereinrichtung 1 weist in einem etwa zylindrischen Gehäuse 2, welches von einem abnehmbaren Gehäusedeckel 3 zu verschließen ist, ein von einem zu reinigenden Medium zu durchströmendes Filterelement auf, wobei das zu reinigende Medium über einen seitlich am Filtergehäuse 2 angeordneten Einlasskanal 4 in Pfeilrichtung 5 in den Innenraum der Filtereinrichtung einführbar ist und nach erfolgter Reinigung das Medium über einen weiteren, seitlich angeordneten Auslasskanal 6 in Pfeilrichtung 7 abgeleitet wird. Das zu reinigende Medium kann gasförmig, gegebenenfalls auch flüssig sein. Gemäß einer bevorzugten Ausführung ist die Filtereinrichtung 1 als Ölabscheider ausgebildet, in welchem Öltröpfchen aus einem Öl-Luft-Gemisch abgeschieden werden, welches beispielsweise im Kurbelgehäuse einer Brennkraftmaschine entsteht, wobei die gereinigte Luft aus dem Kurbelgehäuse abgeleitet und insbesondere einem Ansaugkanal der Brennkraftmaschine zugeführt wird. Es kommt aber auch eine Anwendung in einem Gasfilter oder einem Flüssigkeitsfilter in Betracht.

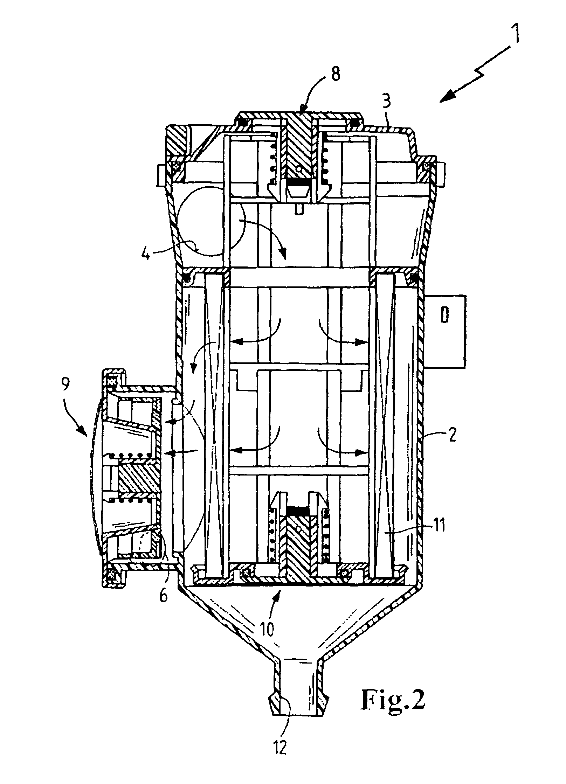

Wie Fig. 1 in Verbindung mit Fig. 2 zu entnehmen, ist in den Gehäusedeckel 3, welcher im Bereich einer axialen Stirnseite des Filtergehäuses 2 angeordnet ist, ein Überdruckventil 8 integriert, welches mit dem Druck auf der Anströmseite des Filterelementes beaufschlagt wird und im Falle eines Übersteigens eines zulässigen Grenzdruckes in seine Öffnungsposition verstellt wird, so dass das eingeleitete Medium auf der Rohseite das Filtergehäuse verlassen kann und eine Überlastung verhindert wird.

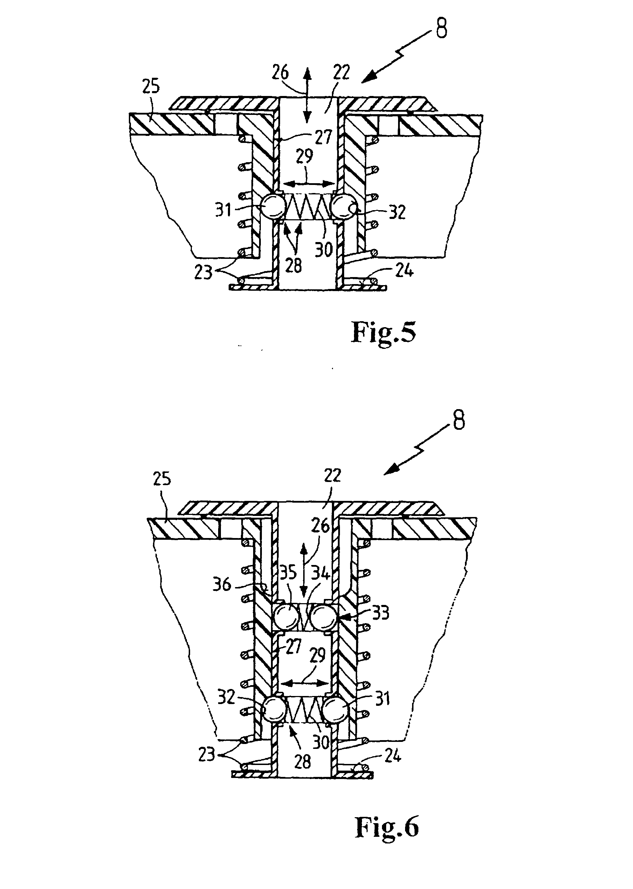

Auf der Reinseite der Filtereinrichtung befindet sich im Bereich des Auslasskanals 6 ein Druckregulierungsventil 9, über das verhindert werden soll, dass im Kurbelgehäuse ein zu hoher Unterdruck entsteht. Hier muss immer ein relativ geringer Unterdruck herrschen, welcher sich in einem sehr kleinen Druckfenster bewegt. Bei einem sehr hohen Unterdruck auf der Saugrohrseite würde sich dieser entgegen der Ausströmrichtung 7 über das im Normalfall offene Druckregulierventil 9 entgegen der Einströmrichtung 5 bis in das Kurbelgehäuse fortpflanzen. Das Druckregulierventil 9 befindet sich für den Fall, dass auf der Reinseite ein relativer Unterdruck, welcher sich innerhalb des gewünschten Druckfensters befindet, gegenüber der Außenseite der Filtereinrichtung 1 besteht, in Öffnungsposition. Dieses wird durch eine Voreinstellung des Druckregulierventils 9 mittels der Ventilfeder 23 (Fig. 5) erzielt. Übersteigt der relative Unterdruck gegenüber dem Druck auf der Außenseite der Filtereinrichtung 1 jedoch die diesem Druck entgegen wirkende Vorspannkraft der Ventilfeder 23, wird das Druckregulierventil in seine Schließposition überführt.

Wie der Schnittdarstellung gemäß Fig. 2 weiterhin zu entnehmen, wird das zu reinigende Medium über den Einlasskanal 4 in das Innere des Filtergehäuses 2 eingeleitet, in welchem sich ein zylindrisches Filterelement 11 befindet, dessen radiale Innenseite die Anströmseite bildet und von dem zu reinigenden Fluid radial von innen nach außen durchströmt wird. Im Falle eines Abscheiders werden die abgeschiedenen Öltröpfchen auf der radialen Innenseite des Filterelementes 11 nach unten abgeleitet. Die gereinigte Luft passiert das Filterelement radial von innen nach außen, wird in einem das Filterelement 11 radial umgreifenden Ringraum gesammelt und nach dem Passieren des Druckregulierungsventiles 9 nach außen abgeleitet.

Im Bodenbereich befindet sich im Innenraum des Filterelementes 11 ein Bypassventil 10, welches bei Übersteigen eines Mindestdruckes in seine Öffnungsposition überführt wird, woraufhin die abgeschiedenen Öltröpfchen nach unten abgeleitet und über einen konisch zulaufenden Bereich des Filtergehäuses 2 sowie einen Austrag 12 abgeleitet werden.

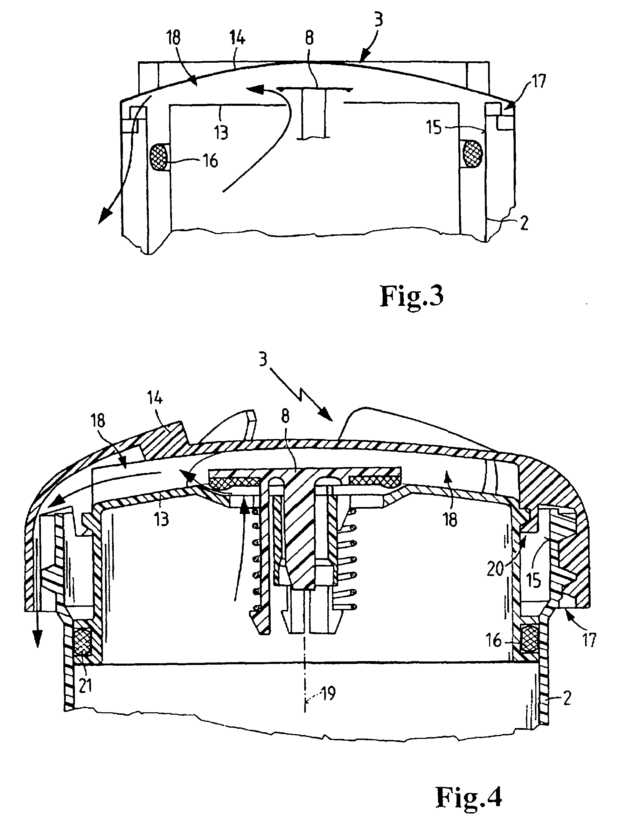

Die Fig. 3 und 4 zeigen einen Gehäusedeckel 3 in einer modifizierten Ausführung. Der Gehäusedeckel 3 ist zweiteilig aufgebaut und umfasst einen Innendeckel 13 sowie einen Außendeckel 14. Der Innendeckel 13 ist in eine Gehäuseöffnung 15 des Filtergehäuses 2 eingesetzt, wobei auf der Außenseite des Innendeckels 13 ein Dichtring 16 gehalten ist, der an der Innenwand der Gehäuseöffnung 15 dichtend anliegt. Der Außendeckel 14 liegt näherungsweise parallel zum Innendeckel 13 und übergreift die Gehäuseöffnung 15, so dass die Innenseite eines zylindrischen Wandabschnitts des Außendeckels 14 benachbart zur Außenwand der Gehäuseöffnung 15 liegt. Der Außendeckel 14 ist mit der Wandung der Gehäuseöffnung 15 über eine Verschlusseinrichtung 17 verbunden. Der Innendeckel 13 ist Träger des Überdruckventiles 8, welches in Öffnungsposition einen Strömungsweg durch den Innendeckel 13 in einen Abströmweg 18 hinein freigibt, welcher zwischen dem Innendeckel 13 und dem Außendeckel 14 gebildet ist. Der Strömungsweg 18 kommt insbesondere dadurch zustande, dass Innendeckel 13 und Außendeckel 14 auf Abstand zueinander liegen, wodurch ein etwa tellerförmiger Strömungsraum gebildet ist, der sich im Wesentlichen über die Stirnseite von Innendeckel und Außendeckel erstreckt. Es kann gegebenenfalls aber auch zweckmäßig sein, im Bereich der Außenseite des Innendeckels 13 und/oder im Bereich der Innenseite des Außendeckels 14 Strömungsnuten für den abzuleitenden Überdruck aus dem Inneren des Filtergehäuses 2 vorzusehen.

Das bei geöffnetem Überdruckventil 8 in den Abströmweg 18 einfließende Medium wird radial nach außen geführt und verlässt den Strömungsweg 18 zwischen Innendeckel 13 und Außendeckel 14 über axiale Strömungsspalte, welche zwischen der Außenwand der Gehäuseöffnung 15 und der Innenseite des zylindrischen Abschnittes des Außendeckels 14 gebildet sind.

Wie im Einzelnen Fig. 4 zu entnehmen, ist die Verschlusseinrichtung 17, über die der Außendeckel 14 mit der Wandung der Gehäuseöffnung 15 verbunden ist, als Verschlussgewinde ausgeführt. Das Verschlussgewinde weist Abschnitte unterschiedlicher Gewindesteigung auf, wobei in einem Bereich benachbart zur Verschlussposition des Außendeckels 14, der in Fig. 4 durch den unteren Teil des Gewindes auf der Außenwand des Gehäusedeckels gebildet ist, sich der Abschnitt geringerer Steigung befindet und im Bereich der axialen Stirnseite der Gehäuseöffnung ein Abschnitt mit größerer Gewindesteigung angeordnet ist. Dies führt dazu, dass bei einem Aufsetzen des Außendeckels 14 auf das Verschlussgewinde zu Beginn der Schließbewegung aufgrund der großen Gewindesteigung zunächst eine verhältnismäßig große axiale Verschiebung entlang der Filterlängsachse 19 in Richtung Verschlussposition erzielt wird, wohingegen bei Erreichen des Abschnittes geringerer Steigung und Annäherung an den Dichtsitz bzw. die Verschlussposition des Außendeckels 14 sich eine langsamere axiale Verschiebung des Außendeckels einstellt, wodurch insbesondere bei einem manuellen Festziehen des Gehäusedeckels mehr bzw. eine besser dosierbare Kraft zum Erreichen des Dichtsitzes zur Verfügung steht.

In das Verschlussgewinde können axiale Strömungsnuten eingebracht sein, um ein hindernisfreies Abströmen des Fluids im Abströmraum bzw. Abströmweg 18 zu ermöglichen.

Zusätzlich zu der Verschlusseinrichtung 17 zwischen Wandung der Gehäuseöffnung 15 und Außendeckel 14 ist eine Rasteinrichtung 20 vorgesehen, die zwischen Innendeckel 13 und Außendeckel 14 angeordnet ist und eine in Achsrichtung formschlüssige Verrastung zwischen Innen- und Außendeckel ermöglicht. Die Rasteinrichtung 20 umfasst einen bzw. mehrere Rastnocken, welche zweckmäßig auf der außen liegenden Umfangsseite des Innendeckels 13 angeordnet ist, sowie eine Rastnut, die am Innenmantel des Außendeckels 14 eingebracht ist. Die Rasteinrichtung 20 erlaubt in Achsrichtung eine formschlüssige Verbindung zwischen Innendeckel und Außendeckel. Zweckmäßig wird die Rastposition erst bei Erreichen des Dichtsitzes erreicht. Weiterhin kann es vorteilhaft sein, zur Realisierung eines Bajonettverschlusses mit einer hintereinander auszuführenden axialen Verschiebe- und rotatorischen Drehbewegung die Rastnocken auf der Außenseite des Innendeckels 13 nicht durchgehend umlaufend, sondern mit zwischenliegenden Abständen auszuführen, indem beispielsweise im 120°-Winkel verteilt drei einzelne Rastnocken angeordnet sind, denen entsprechend ausgeführte Rastnutabschnitte am Außendeckel zugeordnet sind. Die Rasteinrichtung 20 stellt eine zusätzliche Sicherung gegen ein unbeabsichtigtes Lösen des Gehäusedeckels dar.

Wie Fig. 4 weiterhin zu entnehmen, ist der Dichtring 16 in eine umlaufende Dichtnut 21 an der Außenseite des Innendeckels 13 eingesetzt. Die Aufteilung des Gehäusedeckels 3 in zwei separate Deckelteile bietet den Vorteil einer funktionalen Trennung zwischen Innendeckel und Außendeckel. Der Innendeckel 13 ist Träger des Dichtringes 16, dem Außendeckel 14 kommt dagegen die Funktion zu, beide Deckelteile am Filtergehäuse 2 zu arretieren und außerdem das Überdruckventil 8 vor Verschmutzung zu schützen. Diese Funktionsteilung bietet außerdem den Vorteil, dass der Dichtring beim Öffnen und Schließen des Deckels nicht verdreht wird, sondern lediglich gemeinsam mit dem Innendeckel 13 in Richtung der Längsachse 19 translatorisch verschoben werden muss. Da der Dichtring 16 insbesondere nach einem längeren Einsatz in seiner Dichtposition mit der anliegenden Innenwand der Gehäuseöffnung 15 verkleben kann, sind für ein translatorisches, axiales Entfernen des Innendeckels geringere Kräfte erforderlich als dies bei einer Drehbewegung der Fall wäre. Hierdurch wird der Dichtring geschont und eine Beschädigung beim Einsetzen und Herausnehmen vermieden. Zudem bietet die Zweiteilung des Gehäusedeckels 3 den Vorteil, dass der zwischenliegender Abströmweg 18 mit geringem konstruktivem Aufwand herzustellen ist, über den der bei geöffnetem Ventil 8 aus dem Gehäuseinneren entweichende Überdruck nach außen abgeleitet werden kann.

Der Innendeckel 13, der Außendeckel 14, die Verschlusseinrichtung 17 und die Rasteinrichtung 20 können jeweils aus Kunststoff gefertigt sein.

In Fig. 5 ist eine besondere Ausgestaltung eines Überdruckventiles 8 dargestellt. Das Überdruckventil 8 besitzt einen Ventilkörper 22, welcher in Verstellrichtung 26 axial in einer Ventilkörperführung 27 zwischen der in Fig. 5 dargestellten Schließstellung und einer angehobenen Öffnungsstellung zu verstellen ist, wobei die Ventilkörperführung 27 in einem Gehäuseteil 25 ausgebildet ist. Der Ventilkörper 22 wird über eine Ventilfeder 23, welche an einem fest mit dem Ventilkörper 22 verbundenen Ventilteller 24 abgestützt ist, in seine Schließposition beaufschlagt. Bei einem im Inneren des Gehäuses wirkenden Überdruck, welcher die Schließkraft der Ventilfeder 23 übersteigt, wird der Ventilkörper 22 in seine Öffnungsposition verstellt, so dass der Überdruck entweichen kann.

Zur Beeinflussung der Federcharakteristik und des Öffnungs- bzw. Schließverhaltens ist das Überdruckventil 8 mit einer Klemmeinrichtung 28 versehen, welche den Ventilkörper 22 mit einer Klemmkraft beaufschlagt, die gemäß Pfeilrichtung 29 quer zur Verstellrichtung 26 in Radialrichtung verläuft und den Ventilkörper 22 in der Ventilkörperführung 27 festklemmt. Die Klemmeinrichtung 28 ist fest mit dem Ventilkörper 22 verbunden und umfasst eine Zusatzfeder 30, die insbesondere als Druckfeder ausgeführt ist und deren Federwirkung in Pfeilrichtung 29 verläuft. Die Zusatzfeder 30 ist an ihren beiden axialen Stirnseiten mit Rastkugeln 31 verbunden, welche durch die Kraft der Zusatzfeder radial nach außen mit einer Klemmkraft beaufschlagt werden und in Rastausnehmungen 32 eingepresst werden, die in der Innenwand der Ventilkörperführung 27 ausgebildet sind und zweckmäßig an die Form der Rastkugeln 31 angepasst sind. Die Klemmeinrichtung 28 befindet sich in der Schließposition des Ventilkörpers 22 in ihrer Raststellung, so dass für ein Überführen des Überdruckventiles 8 in die Öffnungsstellung ein höherer Überdruck erforderlich ist als bei Ausführungen ohne Klemmeinrichtung 28. Die Höhe des zusätzlich erforderlichen Druckes zum Lösen der Klemmeinrichtung 28 und Überführen des Ventiles in die Öffnungsposition kann über die Kraft der Zusatzfeder 30 sowie die Geometrie der von der Zusatzfeder beaufschlagten Rastelemente und die Geometrie der Rastausnehmungen beeinflusst werden.

Nachdem der Grenzdruck erreicht worden ist, oberhalb dem das Ventil in die Öffnungsstellung überführt wird, werden zunächst auf Grund der axialen Stellbewegung des Ventilkörpers in Richtung Öffnungsposition die Rastkugeln 31 entgegen der Kraft der Zusatzfeder 30 nach innen gedrückt und liegen bei einem Fortschreiten der Öffnungsbewegung an der Innenwand der Ventilkörperführung 27 an. Die Klemmkraft, die von der Klemmeinrichtung im zwischenliegenden Überführungsabschnitt zwischen Schließ- und Öffnungsposition auf die Innenwand der Ventilkörperführung ausgeübt wird, ist deutlich geringer als die Klemmkraft in der Schließposition des Ventiles, da in Klemmposition die Klemmeinrichtung eine formschlüssige Raststellung einnimmt, im zwischenliegenden Überführungsabschnitt dagegen nur an der Innenwand entlang gleitet. Zusätzlich ist zu berücksichtigen, dass in Ruhestellung des Ventilkörpers zunächst eine höhere Haftreibung zwischen den von der Zusatzfeder beaufschlagten Rastelementen und den Rastausnehmungen zu überwinden ist, wohingegen bei einer Bewegung des Ventilkörpers nur eine geringere Gleitwirkung zwischen den nach außen gedrückten Rastelementen und der Innenwand der Ventilkörperführung wirkt.

Dieser starke Abfall der Klemmkraft verändert die Gesamtfedercharakteristik und das Öffnungsverhalten des Ventiles. Der Ventilkörper ist gegenüber Ausführungen aus dem Stand der Technik mit höherer Überführungsgeschwindigkeit von der Schließposition in die Öffnungsposition zu überführen. Das Ventil kann schlagartig in die Öffnungsposition verstellt werden.

Auch im Ausführungsbeispiel nach Fig. 6 ist ein Überdruckventil 8 dargestellt, welches sich in seiner Schließposition befindet und axial in Verstellrichtung 26 zwischen Schließ- und Öffnungsposition zu verstellen ist. Das Ventil besitzt wie dasjenige des vorherigen Ausführungsbeispieles eine Klemmeinrichtung 28, über die der Ventilkörper 22 in Schließposition mit einer quer zur Verstellrichtung 26 liegenden Klemmkraft gemäß Pfeilrichtung 29 beaufschlagt wird. Des Weiteren ist eine zweite Klemmeinrichtung 33 vorgesehen, die entsprechend wie die erste Klemmeinrichtung 28 aufgebaut ist und eine weitere Zusatzfeder 34 und von der Zusatzfeder 34 beaufschlagte, axiale Rastkugeln 35 umfasst. Die Rastkugeln 35 greifen in Öffnungsposition des Ventiles in Rastausnehmungen 36 ein, die in der Innenwand der Ventilkörperführung 27 ausgebildet sind. Auf diese Weise befindet sich der Ventilkörper 22 sowohl in seiner Schließposition als auch in seiner Öffnungsposition jeweils in einer Raststellung, aus der eine Überführung in die jeweils gegenüberliegende Endposition nur mit einem erhöhten Kraftaufwand möglich ist, verglichen mit Ausführungen ohne Klemmeinrichtungen. Die Schließbewegung des Ventiles wird hierbei durch die Kraft der Ventilfeder 23 unterstützt. Sobald der Überdruck im Gehäuseinneren einen Grenzwert unterschreitet, reicht die Kraft der Ventilfeder aus, den Ventilkörper 22 gegen den verbleibenden Überdruck im Gehäuseinneren und gegen die Klemmkraft der zweiten Klemmeinrichtung 33 axial in Richtung seiner Schließposition zu verstellen. Analog zur Öffnungsbewegung kann mit Hilfe der zweiten Klemmeinrichtung 33 ein schlagartiges Schließen des Ventiles erreicht werden, da die Klemmkraft schlagartig reduziert wird, sobald die Rastkugeln 35 der zweiten Klemmeinrichtung 33 aus ihrem Sitz in den Rastausnehmungen 36 herausgehoben werden.

## Patentansprüche

1. Filtereinrichtung, insbesondere Filtereinrichtung zur Kurbeigehäuseentlüftung, mit einem Filterelement (11), das in einem Filtergehäuse (2) angeordnet ist, welches von einem Gehäusedeckel mit einem Dichtring (16) zu verschließen ist, wobei dem Filterelement (11) über eine Einströmöffnung im Filtergehäuse (2) zu reinigendes Medium zuführbar ist und auf der Abströmseite des Filterelements (11) gereinigtes Medium über eine Abströmöffnung im Filtergehäuse (2) abzuführen ist, wobei
der Gehäusedeckel zweigeteilt ist und einen Innendeckel (13) und einen Außendeckel (14) aufweist, wobei der Innendeckel (13) in eine Gehäuseöffnung (15) einsetzbar ist und der Dichtring (16) zwischen Innendeckel (13) und Innenwandung der Gehäuseöffnung (15) angeordnet ist, wobei der Innendeckel (13) Träger des Dichtringes (16) ist, und dass der Außendeckel (14) die Gehäuseöffnung (15) übergreift, wobei der Außendeckel (14) über eine Verschlusseinrichtung (17) mit der Wandung der Gehäuseöffnung (15) verbunden ist.

2. Filtereinrichtung nach Anspruch 1, **dadurch gekennzeichnet, dass** die Verschlusseinrichtung (17) ein Verschlussgewinde umfasst.

3. Filtereinrichtung nach Anspruch 2, **dadurch gekennzeichnet, dass** das Verschlussgewinde Abschnitte unterschiedlicher Gewindesteigung aufweist.

4. Filtereinrichtung nach Anspruch 3, **dadurch gekennzeichnet, dass** das Verschlussgewinde im Bereich benachbart zur Verschlussposition des Außendeckels (14) auf der Gehäuseöffnung (15) einen Abschnitt geringer Steigung aufweist.

5. Filtereinrichtung nach einem der Ansprüche 1 bis 4, **dadurch gekennzei-chnet, dass**
der Innendeckel (13) über eine Rasteinrichtung (20) am Filtergehäuse (2) gehalten ist.

6. Filtereinrichtung nach Anspruch 5, **dadurch gekennzeichnet, dass** die Rasteinrichtung (20) zwischen Innendeckel (13) und Außendeckel (14) angeordnet ist.

7. Filtereinrichtung nach Anspruch 5 oder 6, **dadurch gekennzeichnet, dass**
die Rasteinrichtung (20) einen formschlüssig in eine Rastnut eingreifenden Rastnocken umfasst.

8. Filtereinrichtung nach einem der Ansprüche 1 bis 7, **dadurch gekennzeichnet, dass**
der Dichtring (16) in eine umlaufende Dichtnut (21) an der Außenseite des Innendeckels (13) eingesetzt ist.

9. Filtereinrichtung nach einem der Ansprüche 1 bis 8, **dadurch gekennzeichnet, dass**
in den Innendeckel (13) ein Überdruckventil (8) integriert ist, das mit Druck auf der Anströmseite des Filterelements (11) beaufschlagt ist.

10. Filtereinrichtung nach einem der Ansprüche 1 bis 9, **dadurch gekennzeichnet, dass**
zwischen Innendeckel (13) und Außendeckel (14) ein Abströmweg (18) gebildet ist.

## Claims

1. Filter device, more especially a filter device for crankcase ventilation, said filter device having a filter element (11), which is disposed in a filter housing (2), which can be closed by a housing cover having a sealing ring (16), wherein medium to be filtered is suppliable to the filter element (11) via an inlet opening in the filter housing (2) and on the filtered side of the filter element (11), filtered medium is dischargeable via an outlet opening in the filter housing (2), wherein the housing cover is in two parts and includes an inner cover (13) and an outer cover (14), wherein the inner cover (13) is insertable into a housing opening (15) and the sealing ring is disposed between the inner cover (13) and the inner wall of the housing opening (15), wherein the inner cover (13) is the supporting means of the sealing ring (16), and in that the outer cover (14) engages over the housing opening (15), wherein the outer cover (14) is connected to the wall of the housing opening (15) via a closing means (17).

2. Filter device according to claim 1, **characterised in that** the closing means (17) comprises a closing thread.

3. Filter device according to claim 2, **characterised in that** the closing thread includes sections of different thread pitch.

4. Filter device according to claim 3, **characterised in that** the closing thread includes a section of smaller pitch in the region adjacent the closing position of the outer cover (14) on the housing opening (15).

5. Filter device according to one of claims 1 to 4, **characterised in that** the inner cover (13) is retained on the filter housing (2) via a locking device (20).

6. Filter device according to claim 5, **characterised in that** the locking device (20) is disposed between the inner cover (13) and the outer cover (14).

7. Filter device according to claim 5, **characterised in that** the locking device (20) comprises a locking cam that engages a locking groove in a positive locking manner.

8. Filter device according to one of claims 1 to 7, **characterised in that** the sealing ring (16) is inserted into a circumferential sealing groove (21) on the outside of the inner cover (13).

9. Filter device according to one of claims 1 to 8, **characterised in that** a pressure-relief valve (8) is incorporated in the inner cover (13), said pressure-relief valve being impinged upon with pressure on the incoming side of the filter element (11).

10. Filter device according to one of claims 1 to 9, **characterised in that** a discharge path is formed between the inner cover (13) and the outer cover (14).

## Revendications

1. Dispositif de filtrage, notamment dispositif de filtrage pour l'aération du carter-moteur, comportant un élément filtrant (11) disposé dans un carter de filtre (2) devant être fermé par un couvercle de carter muni d'une bague d'étanchéité (16), l'élément filtrant (11) pouvant être amené par une ouverture d'entrée dans le carter de filtre (2) vers le liquide à nettoyer et le liquide nettoyé devant être évacué sur le côté d'évacuation de l'élément filtrant (11) par une ouverture d'évacuation dans le carter de filtre (2), le couvercle de carter étant séparé en deux et présentant un couvercle intérieur (13) et un couvercle extérieur (14), le couvercle intérieur (13) pouvant être inséré dans une ouverture de carter (15) et la bague d'étanchéité (16) étant disposée entre le couvercle intérieur (13) et la paroi intérieure de l'ouverture de carter (15), le couvercle intérieur (13) étant le support de la bague d'étanchéité (16),
**caractérisé en ce que**
le couvercle extérieur (14) s'engrène au-dessus de l'ouverture de carter (15), le couvercle extérieur (14) étant relié à la paroi de l'ouverture de carter (15) par un dispositif de verrouillage (17).

2. Dispositif de filtrage selon la revendication 1,
**caractérisé en ce que**
le dispositif de verrouillage (17) comprend un taraudage de blocage.

3. Dispositif de filtrage selon la revendication 2,
**caractérisé en ce que**
le taraudage de blocage présente des sections de différents pas.

4. Dispositif de filtrage selon la revendication 3,
**caractérisé en ce que**
le taraudage de blocage présente une section de plus petit pas dans la zone voisine de la position de blocage du couvercle extérieur (14) sur l'ouverture de carter (15).

5. Dispositif de filtrage selon l'une quelconque des revendications 1 à 4,
**caractérisé en ce que**
le couvercle intérieur (13) est maintenu sur le carter de filtre (2) par un dispositif d'encliquetage (20).

6. Dispositif de filtrage selon la revendication 5,
**caractérisé en ce que**
le dispositif d'encliquetage (20) est disposé entre le couvercle intérieur (13) et le couvercle extérieur (14).

7. Dispositif de filtrage selon la revendication 5 ou 6,
**caractérisé en ce que**
le dispositif d'encliquetage (20) comprend une came d'encliquetage s'engrenant par complémentarité de forme dans une rainure d'encliquetage.

8. Dispositif de filtrage selon l'une quelconque des revendications 1 à 7,
**caractérisé en ce que**
la bague d'étanchéité (16) est employée dans une rainure d'étanchéité rotatoire (21) sur la face extérieure du couvercle intérieur (13).

9. Dispositif de filtrage selon l'une quelconque des revendications 1 à 8,
**caractérisé en ce qu'**
une soupape de surpression (8) sollicitée par la pression exercée sur la face d'afilux de l'élément filtrant (11) est intégrée dans le couvercle intérieur (13).

10. Dispositif de filtrage selon l'une quelconque des revendications 1 à 9,
**caractérisé en ce qu'**
une voie d'évacuation (18) est formée entre un couvercle intérieur (13) et un couvercle extérieur (14).
